# NEW EUROPEAN PATENT SPECIFICATION

(11) **EP 0 498 686 B2**
(45) Date of publication and mention of the opposition decision: **21.04.2004**
(45) Mention of the grant of the patent: 27.11.1996
(21) Application number: 92400171.2
(22) Date of filing: 22.01.1992
(51) Int. Cl.: C09C 1/00

(54) **Bismuth oxychloride nacreous pigment having improved weather fastness and the production thereof**
Perlmutterartiges Wismutoxychloridpigment mit verbesserter Witterungsbeständigkeit und seine Herstellung
Pigment nacré à base d'oxychlorure de bismuth ayant une résistance accrue aux intempéries et sa production

(30) Priority: 08.02.1991 US 654292
(43) Date of publication of application: 12.08.1992
(73) Proprietor: ENGELHARD CORPORATION, Iselin, New Jersey 08830-0770 (US)
(72) Inventor: Eberts, Robert E., Mahopac, New York (US); Juby, Robert M, II, Cold Spring, New York (US); Venturini, Michael T., II, Peekskill, New York (US)
(74) Representative: Thinat, Michel

(56) References cited:
- EP-A- 0 220 509
- EP-A- 0 220 617
- DE-PS- 1 003 377
- JP-A- 1 292 067
- WORLD PATENTS INDEX LATEST ACCESSION NO. 90-011676, WEEK 2 DERWENT PUBLICATIONS LTD, LONDON GB
- Bäumer, "Bismuth salts as nacreous pigments", Paint Manufacture. pp. 31-38, March 1977
- Bäumer "Bismuth salts as nacreous pigments", The Bulletin of the Bismuth Institute, 1977

## Description

### BACKGROUND OF THE INVENTION

### 1. Field of the Invention:

The present invention relates to pigments and, more particularly, nacreous or pearlescent pigments.

### 2. Description of the-Related Art:

Nacreous or pearlescent pigments are lamellar or plate-like pigments which impart a pearly or nacreous luster to objects on which or in which they are used. Natural pearl essence, a mixture of guanine and hypoxanthine obtained from the scales of fish, has long been used in cosmetic formulations. Synthetic nacreous pigments developed for cosmetic and industrial use include bismuth oxychloride, bismuth oxychloride-mica, titania coated mica and lead carbonate.

Bismuth oxychloride is used as a pearlescent pigment in many fields. For example, it is used as a pigment in cosmetics such as nail enamel and lipstick. It is also used as a pigment for plastics and paints. It is an inherent characteristic of bismuth oxychloride to lack weather fastness. The term "weather fastness", as used herein, is meant to include weather resistance and light stabilization.

### SUMMARY OF THE INVENTION

Accordingly, it is an object of the invention to provide bismuth oxychloride nacreous pigment with improved weather fastness, and a method for producing such pigment.

This objective, and other objectives, are achieved by providing an improved bismuth oxychloride pearlescent pigment which comprises bismuth oxychloride crystals coated with cerium hydroxide. The cerium hydroxide coating on the bismuth oxychloride crystals imparts the improved weather fastness qualities thereto.

A method of preparing the improved pearlescent pigment discussed above is also provided. The method includes adding a cerium salt solution to a bismuth oxychloride pigment suspension. Preferably, the cerium salt solution is added to a first aqueous suspension of bismuth oxychloride pigment crystals to form a second suspension containing the pigment crystals and cerium hydroxide. The second suspension is maintained at a pH below the pH at which cerium hydroxide precipitates. The pH of the second suspension is then raised above the precipitation pH to cause the cerium hydroxide to precipitate and coat the bismuth oxychloride pigment crystals. The aqueous bismuth oxychloride pigment suspension is preferably heated prior to the addition thereto of the cerium salt solution, which is preferably solution, either a cerous chloride solution or cerous nitrate solution.

### DESCRIPTION OF THE INVENTION

Bismuth oxychloride nacreous pigment, which is coated with a cerium compound in accordance with the invention, may be prepared in any conventional manner.

One method includes adding a soluble bismuth compound, which may be in solution, and a source of chloride ions to an aqueous acidified reservoir. Any soluble bismuth compound can be used and bismuth nitrate is the compound most often employed. To prevent premature hydrolysis and precipitation of insoluble bismuth compounds, a compatible mineral or other strong acid is added to both the bismuth salt solution and to the reservoir. Hydrochloric acid or a mixture of hydrochloric and nitric acids is convenient since it also serves as a source of the needed chloride ions. Hydrolysis of the bismuth compound is controlled by maintaining the acidity within desired limits by adding base to neutralize acid which forms during the hydrolysis reaction. The base used is conveniently an alkali metal hydroxide; however, other soluble sources of hydroxyl ions such as a strongly basic amine or a base precursor such as urea can also be used.

The pH of the acid reservoir is usually maintained at about 1 during the precipitation.

The temperature at which the preparation of the BiOCl pigment is effected is generally between 50° and 100°C, with a temperature range of 60° to 80°C being preferred.

Solutions of the soluble bismuth salt and the base are preferably simultaneously pumped into the acidic reservoir, the amount of bismuth solution being controlled so as to produce a specific pigment crystal size.

If the BiOCl pigment crystals have been freshly prepared in a manner, for example, as discussed above, the resulting pigment slurry may be allowed to settle and supernatant may be withdrawn prior to coating the BiO-Cl pigment crystals with the cerium compound in accordance with the invention, resulting in an aqueous paste dispersed in water. In any event, to coat BiOCl pigment crystals with the cerium compound, BiOCl pigment slurry is preferably but not necessarily heated, preferably to a temperature between 35°C and 100°C, most preferably to to between 50 and 80°C, and a cerium salt solution is added thereto to form a dispersion containing the pigment and a rare earth metal compound. The pH of the dispersion is maintained below the precipitation pH of cerium compounds which is 4, and is preferably maintained below 1, in any suitable manner. The pH of the dispersion is then raised above the precipitation pH, preferably to about 10, to precipitate the cerium compound and coat it onto the BiOCl crystals. The slurry may then be allowed to cool to room temperature, and the pigment may then be separated (for example by being concentrated), flushed (i.e., transferred into an oil or varnish) and formulated, in any suitable, conventional manner.

In a preferred embodiment of the invention, the cerium salt solution is a solutions of cerous chloride or cerous nitrate.

The BiOCl crystals are coated with the cerium compound in an amount of 1 to 7.5 wt.%, based upon the total weight of the pigment, preferably 1 to 6 wt%.

In order to more fully illustrate the present invention, the following examples have been set forth. Unless otherwise indicated, all temperatures are in degrees centigrade and all parts and percentages are by weight throughout this specification and the following claims.

### EXAMPLE 1

166 milliliters of concentrated hydrochloric acid were added to a 12 liter demineralized water reservoir, to bring the pH of the reservoir to about 1. The reservoir was then heated to 70°C. 420 milliliters of bismuth feed solution (HCl and bismuth nitrate; 0.2g Bi/ml) were pumped into the reservoir at a rate of 2.5 ml/min. Simultaneously, 6N sodium hydroxide was pumped into the reservoir at about the same rate. The amount of bismuth nitrate solution added resulted in an average crystal size of 13 micrometers. At this point, 10 grams of cerous chloride were added to the reservoir and the caustic feed was continued until a pH of 8-11 was obtained. The resulting pigment was then isolated by settling and decanting.

A portion of the pigment was then flushed into an organic formulation. The resulting pigment formulation was then dispersed to a 4.0% concentration in a nitrocellulose lacquer to form a lacquer dispersion of the following composition:

| | |
|---|---|
| 15/20 sec. RS nitrocellulose | 2.85% |
| 30/40 sec. RS nitrocellulose | 6.33% |
| IPOH-wet | 4.94% |
| Amyl Acetate H.B. | 43.28% |
| Butyl Carbitol | 3.00% |
| Butyl Acetate | 39.60% |

A "drawdown", a standard technique for evaluating nacreous pigments, was then made by spreading a pool of the lacquer dispersion on a black and white hiding power chart using a Bird Applicator designated as yielding a wet film thickness of 0,0762 10⁻³ m (0.003 inch). The card was then allowed to rest in a horizontal position while the solvent evaporated and the film hardened. The pigment treated in accordance with this invention exhibited a pearl/white appearance.

A control run following the above procedure, but without the addition of cerous chloride to the reservoir was performed and a drawdown of the resulting pigment was also made.

The pigments were then evaluated for light stability. The freshly precipitated BiOCl crystals were first concentrated in the aqueous phase by settling and removing the supernatant. The crystals were then flushed into an organic phase which consisted of a ketone ester and aromatic solvents. The crystals were then dispersed in an organic soluble resin and the crystal content was adjusted to 60% by weight. The dispersed crystals were then incorporated into an acrylic-melamine/formaldehyde baking enamel so that the enamel contained 10% crystals by weight of the total resin solids in the enamel. The enamel dispersion was sprayed onto Bonderite 40 treated cold rolled and polished steel panels primed with a low film build cathodic electro-deposition primer. Wet on wet coats were applied so that a dry film thickness of 0,023 10⁻³ m to 0,028 10⁻³ m (0.9 mils to 1.1 mils) resulted. This was followed by an acrylic-melamine/formaldehyde clear coat of 0,038 10⁻³ m to 0,05 10⁻³ m (1.5 to 2.0 mils) dry film thickness. The panels were then baked for 30 minutes at 121°C (250°F) in a forced air oven.

The baked panels were exposed in Florida, black box 5° south. After 12 months exposure, the darkening of the panels were analyzed by obtaining L values. The control sample had a ClELabΔL of -43.4 as measured on Macbeth Color-Eye 1500. The treated sample had a Δ L of -31.1 and was visibly much less dark than the control. The L value is a measure of the lightness and darkness of a sample. An L value of 0 is white and a value of 100 is black.

Panels as described above were also prepared and exposed in a QUV machine for 8 weeks using UVA-340 bulbs. Upon completion of the test, a significant improvement in light fastness was noticed compared to the control.

### EXAMPLE 2

60 grams of sodium chloride were added to a 4.5 liter demineralized water reservoir. At a temperature of 80°C, a bismuth nitrate solution was dumped into the reservoir while the reservoir was being mixed. After 5 minutes, 4.5 grams of cerium chloride heptahydrate were added. The reservoir was then neutralized to a pH of 8.4 and cerium hydroxide coated BiOCl crystals were settled, collected and dispersed into an acrylic formulation. The resulting pigment had good luster and significantly improved weather resistance, compared to the untreated control. This was tested by using the same sample preparation as described in Example 1. The panels were exposed in a QUV machine using a cycle of 8 hours UV at 65°C (150°F) followed by 4 hours of humidity at 50° C (120°F) for a total of 8 weeks. The improvements were similar to those obtained in Example 1.

### EXAMPLE 3

194 milliliters of concentrated hydrochloric acid were added to a 12 liter demineralized water reservoir to bring the pH of the reservoir to about 1. The reservoir which was then heated to 70°C. 460 milliliters of the bismuth feed solution of Example 1 were pumped into the reservoir at a rate of 2.0 ml/min. Simultaneously, 6N sodium hydroxide was pumped into the reservoir at about the same rate. The amount of bismuth solution added resulted in an average crystal size of 3 micrometers. At this point, 3.75 grams of cerium chloride heptahydrate were added to the reservoir and the caustic feed was continued until a pH between 8 - 11 was obtained. The resulting pigment was then isolated by settling and decanting.

When formulated, sprayed and exposed in a QUV machine for 8 weeks as described in Example 2, the treated pigment had good weather resistance compared to the untreated control.

### EXAMPLE 4

A slurry containing precipitated BiOCl crystals was allowed to settle and the supernatant was withdrawn. A 70% aqueous paste resulted. 14.3 grams of the paste (10.0 grams of crystals) were dispersed in 1.5 liters of distilled water to form a slurry which was then heated to 70°C and maintained at this temperature. The pH of the slurry was 6.2. A solution of 1.51 grams of cerium chloride hexahydrate dissolved in 50 milliliters of distilled water was added at a rate of 2 ml/min while maintaining the pH at 6.2 with 2% NaOH, The pH of the slurry was slowly raised to 10.0 by addition of a 2% NaOH solution at a rate of 2 ml/min. and it was allowed to cool to room temperature. The pigment was concentrated by centrifugation and flushed into toluene.

Various changes and modifications can be made in the composition and process of the present invention without departing from the spirit and scope thereof.

## Claims

1. Pearlescent pigment comprising bismuth oxychloride crystals, **characterized in that** said bismuth oxychloride crystals are coated with from 1 to 7.5 wt.% of cerium hydroxide, based on total weight of said pigment, to improve weather fastness of said pigment.

2. Pearlescent pigment according to claim 1, **characterized in that** said bismuth oxychloride crystals are coated with from 1 to 6 wt.% of cerium hydroxide, based on total weight of said pigment.

3. Process for preparing an improved weather fastness pearlescent pigment comprising bismuth oxychloride crystals, **characterized in that** it comprises the steps of :
- providing a solution of a cerium salt,
- providing a suspension of bismuth oxychloride pigment crystals,
- combining the cerium salt solution and the bismuth oxychloride suspension, and
- precipitating and coating the bismuth oxychloride crystals with from 1 to 7.5 wt.% of cerium hydroxide.

4. Process according to claim 3, **characterized in that** said cerium salt is selected from the group consisting of cerous chloride and cerous nitrate.

5. Process according to claim 3, **characterized in that** it comprises the steps of :
- adding the solution of cerium salt to a first suspension of bismuth oxychloride crystals, to form a second suspension, while maintaining said second suspension at a pH below the pH at which cerium hydroxide precipitates, and
- raising the pH of said second suspension above the pH at which cerium hydroxide precipitates.

6. Process according to claim 3 or 5, **characterized in that** said suspensions are aqueous suspensions.

7. Process according to claim 5, **characterized in that** it further comprises the step of heating said first suspension prior to adding said cerium salt solution.

8. Process according to claim 7, **characterized in that** :
- the step of heating said first suspension is carried out at a temperature of 70°C,
- the pH in the pH maintaining step of the second suspension is 6.2, and
- the pH of the second suspension is raised to 10.

9. Process according to claim 3, **characterized in that** it further comprises the step of heating said suspension prior to adding said cerium salt solution.

## Patentansprüche

1. Perlmutterartiges Pigment mit Wismutoxychlorid-Kristallen, **dadurch gekennzeichnet, dass** die Wismutoxychlorid-Kristalle mit 1 bis 7,5 Gewichtsprozenten von Cerhydroxid auf der Grundlage des Gesamtgewichts des Pigmentes beschichtet sind, um die Wetterbeständigkeit des Pigmentes zu verbessern.

2. Perlmutterartiges Pigment nach Anspruch 1, **dadurch gekennzeichnet, dass** die Wismutoxychlorid-Kristalle mit 1 bis 6 Gewichtsprozenten von Cerhydroxid auf der Grundlage des Gesamtsgewichts des Pigmentes beschichtet sind.

3. Verfahren zur Zubereitung eines eine verbesserte Witterungsbeständigkeit aufweisenden permutterartigen Pigmentes, das Wismutoxychlorid-Kristalle umfasst, **dadurch gekennzeichnet, dass** das Verfahren die folgenden Schritte umfasst :
- Schaffung einer Lösung eines Cersalzes,
- Schaffung einer Suspension von Wismutoxychlorid-Pigmentkristallen,
- Kombination der Cersalzlösung und der Wismutoxychlorid-Suspension, und
- Ausfällen und Beschichten der Wismutoxychlorid-Kristalle mit 1 bis 7,5 Gewichtsprozenten von Cerhydroxid.

4. Verfahren nach Anspruch 3, **dadurch gekennzeichnet,dass** das Cersalz aus der Gruppe ausgewählt ist, die aus Cerchlorid und Cernitrat besteht.

5. Verfahren nach Anspruch 3, **dadurch gekennzeichnet, dass** es die folgenden Schritte umfasst :
- Hinzufügen der Lösung von Cersalz zu einer ersten Suspension von Wismutoxychlorid-Kristallen zur Bildung einer zweiten Suspension, während die zweite Suspension auf einem pH-Wert unterhalb des pH-Wertes gehalten wird, bei dem Cerhydroxid ausgefällt wird, und
- Anheben des pH-Wertes der zweiten Suspension über den pH-Wert, bei dem Cerhydroxid ausfällt.

6. Verfahren nach Anspruch 3 oder 5, **dadurch gekennzeichnet, dass** die Suspensionen wässrige Suspensionen sind.

7. Verfahren nach Anspruch 5, **dadurch gekennzeichnet, dass** es weiterhin den Schritt des Erhitzens der ersten Suspension vor der Hinzufügung der Cersalzlösung umfasst.

8. Verfahren nach Anspruch 7, **dadurch gekennzeichnet, dass** :
- der Schritt der Erhitzung der ersten Suspension bei einer Temperatur von 70°C ausgeführt wird,
- der pH-Wert in dem den pH-Wert aufrechterhaltenden Schritt der zweiten Suspension gleich 6,2 ist, und
- der pH-Wert der zweiten Suspension auf 10 angehoben wird.

9. Verfahren nach Anspruch 3, **dadurch gekennzeichnet, dass** es weiterhin den Schritt des Erhitzens der Suspension vor der Hinzufügung der Cersalzlösung umfasst.

## Revendications

1. Pigment à tons nacrés comprenant des cristaux d'oxychlorure de bismuth, **caractérisé en ce que** lesdits cristaux d'oxychlorure de bismuth sont revêtus avec de 1 à 7,5% en poids d'hydroxyde de cérium, sur la base du poids total dudit pigment, pour améliorer la tenue aux intempéries dudit pigment.

2. Pigment à tons nacrés selon la revendication 1, **caractérisé en ce que** lesdits cristaux d'oxychlorure de bismuth sont revêtus avec de 1 à 6% en poids d'hydroxyde de cérium, sur la base du poids total dudit pigment.

3. Procédé pour préparer un pigment à tons nacrés à résistance aux intempéries améliorée comprenant des cristaux d'oxychlorure de bismuth, **caractérisé en ce qu'**il comprend les étapes de :
- fourniture d'une solution d'un sel de cérium,
- fourniture d'une suspension de cristaux de pigment d'oxychlorure de bismuth;
- combinaison de la solution de sel de cérium et de la suspension d'oxychlorure de bismuth, et
- précipitation et revêtement des cristaux d'oxychlorure de bismuth avec de 1 à 7,5% en poids d'hydroxyde de cérium.

4. Procédé selon la revendication 3, **caractérisé en ce que** ledit sel de cérium est choisi dans le groupe consistant du chlorure céreux et du nitrate céreux.

5. Procédé selon la revendication 3, **caractérisé en ce qu'**il comprend les étapes de :
- ajout de la solution de sel de cérium à une première suspension de cristaux d'oxychlorure de bismuth, pour former une seconde suspension, tout en maintenant ladite seconde suspension à un pH inférieur au pH auquel l'hydroxyde de cérium précipite, et
- augmentation du pH de ladite second suspension au-dessus du pH auquel l'hydroxyde de cérium précipite.

6. Procédé selon la revendication 3 ou 5, **caractérisé en ce que** lesdites suspensions sont des suspensions aqueuses.

7. Procédé selon la revendication 5, **caractérisé en ce qu'**il comprend de plus l'étape de chauffage de ladite première suspension avant l'ajout de ladite solution de sel de cérium.

8. Procédé selon la revendication 7, **caractérisé en ce que** :
- l'étape de chauffage de ladite première suspension est mise en oeuvre à une température de 70°C,
- le pH dans l'étape de maintien du pH de la seconde suspension est de 6,2, et
- le pH de la seconde suspension est augmenté à 10.

9. Procédé selon la revendication 3, **caractérisé en ce qu'**il comprend de plus l'étape de chauffage de ladite suspension avant d'ajouter ladite solution de sel de cérium.
